# EUROPEAN PATENT APPLICATION

(11) **EP 4 559 760 A1**
(43) Date of publication of application: **28.05.2025**
(21) Application number: 23945589.2
(22) Date of filing: 26.09.2023
(51) Int. Cl.: B60R 16/03, B60R 16/033

(54) **LOW-VOLTAGE CIRCUIT CONTROL METHOD, APPARATUS AND SYSTEM, AND DEVICE AND STORAGE MEDIUM**

(30) Priority: 31.07.2023 CN 202310965900
(71) Applicant: Deepal Automobile Technology Co., Ltd., Chongqing 401133 (CN)
(72) Inventor: LIU, Zhentao, Chongqing 401135 (CN); ZUO, Yuan, Chongqing 401135 (CN); SU, Zhong, Chongqing 401135 (CN)
(74) Representative: 2K Patentanwälte Blasberg Kewitz & Reichel
(86) International application number: PCT/CN2023/121344
(87) International publication number: WO 2025/015708

(57) **Abstract**

A low-voltage circuit control method, which is applied to a power management unit (11) in a low-voltage circuit control system (10), comprises: when the current of a low-voltage loop is greater than a preset current, determining, on the basis of voltages at two ends of a power management unit, whether a fault point of a low-voltage circuit control system is located in a second low-voltage loop (14); then, when the fault point is not located in the second low-voltage loop, controlling a direct-current converter (12) to be turned off, and on the basis of the current of the low-voltage loop after the direct-current converter is turned off, determining a turned-on/turned-off state of the power management unit, such that at least the second low-voltage loop can work normally; and when the fault point is located in the second low-voltage loop, controlling the power management unit to be in the turned-off state, such that the first low-voltage loop (13) can work normally. A low-voltage circuit control apparatus, which is applied to a power management unit in a low-voltage circuit control system. An electronic device, which implements a low-voltage circuit control method. A computer-readable storage medium, wherein when stored computer execution instructions are executed by a processor of an electronic device, the electronic device can execute a low-voltage circuit control method. A low-voltage circuit control system, comprising a direct-current converter, a low-voltage circuit, and a power management unit for executing a low-voltage circuit control method. The low-voltage circuit control system consists of a single storage battery (141) and a single direct-current converter (12), and therefore the costs can be effectively reduced.

## Description

### TECHNICAL FIELD

This application relates to the field of vehicle control technologies, and in particular, to the field of vehicle power supply technologies, and specifically, to a low-voltage circuit control method, apparatus and system, and a device, and a storage medium.

### BACKGROUND

To ensure reliability of intelligent driving, it is required to ensure normal low-voltage power supply for an electric appliance such as a vehicle control unit, and to ensure driving safety, it is required to ensure normal low-voltage power supply for parts that are strongly related to safety, such as a chassis braking system and a steering system. To meet the foregoing requirements, the following method is generally used: a direct-current converter is connected to two battery loops, and the two battery loops supply power to a low-voltage electric appliance at the same time.

However, in the foregoing method, two batteries need to be disposed, which increases hardware costs for manufacturing a vehicle. Therefore, how to control a low-voltage circuit at low costs is a technical problem to be resolved urgently.

### SUMMARY

This application provides a low-voltage circuit control method, apparatus, and system, a device, and a storage medium, to resolve at least a technical problem in a related technology that a low-voltage circuit cannot be controlled at low costs. Technical solutions of this application are as follows:

According to a first aspect provided in this application, a low-voltage circuit control method is provided and applied to a power management unit in a low-voltage circuit control system. The low-voltage circuit control system further includes a direct-current converter and a low-voltage loop; the low-voltage loop includes a first low-voltage loop and a second low-voltage loop; the power management unit is configured to control on/off of the second low-voltage loop; the direct-current converter is configured to: supply power to a load in the first low-voltage loop, and when the power management unit is in a closed state, supply power to a load in the second low-voltage loop; the second low-voltage loop further includes a battery; and the battery is configured to: supply power to the load in the second low-voltage loop when the power management unit is in an open state, and supply power to the load in the first low-voltage loop and the load in the second low-voltage loop when the power management unit is in a closed state and the direct-current converter is in an open state. The method includes: determining, based on a voltage between two ends of the power management unit when a current in the low-voltage loop is greater than a preset current, whether a fault point of the low-voltage circuit control system is located in the second low-voltage loop; when the fault point is not located in the second low-voltage loop, controlling the direct-current converter to be in an open state, and determining an on/off state of the power management unit based on a current existing in the low-voltage loop after the direct-current converter is in an open state; and when the fault point is located in the second low-voltage loop, controlling the power management unit to be in an open state.

Based on the foregoing technical means, in this application, when the current in the low-voltage loop is greater than the preset current, it can be determined that the low-voltage loop is in an overcurrent state, that is, the low-voltage circuit control system is faulty. Then, whether the fault point of the low-voltage circuit control system is located in the second low-voltage loop may be determined based on the voltage between the two ends of the power management unit. Further, when the fault point is not located in the second low-voltage loop, the current existing in the low-voltage loop after the direct-current converter is in an open state may be used to determine whether the fault point of the low-voltage circuit control system is located in the direct-current converter and determine the on/off state of the power management unit, so that at least the second low-voltage loop can work normally. In this way, a vehicle can still enter a safe state when the low-voltage circuit control system is faulty. When the fault point is located in the second low-voltage loop, the power management unit is controlled to be in an open state. In this way, the first low-voltage loop can work normally, so that the vehicle can still enter the safe state when the low-voltage circuit control system is faulty. In addition, the low-voltage circuit control method proposed in this application is applied to the power management unit in the low-voltage circuit control system, the low-voltage circuit control system further includes the direct-current converter, the first low-voltage loop, and the second low-voltage loop, and the second low-voltage loop further includes the battery. In this way, manufacturing costs can be effectively reduced by disposing a single direct-current converter and a single battery.

In a possible implementation, a first end of the power management unit is separately connected to the direct-current converter and the first low-voltage loop, and a second end of the power management unit is connected to the second low-voltage loop; and the determining, based on a voltage between two ends of the power management unit when a current in the low-voltage loop is greater than a preset current, whether a fault point of the low-voltage circuit control system is located in the second low-voltage loop includes: when the current in the low-voltage loop is greater than the preset current and a voltage at the first end of the power management unit is greater than a voltage at the second end of the power management unit, determining that the fault point is located in the second low-voltage loop; and when the current in the low-voltage loop is greater than the preset current and the voltage at the first end of the power management unit is less than the voltage at the second end of the power management unit, determining that the fault point is not located in the second low-voltage loop.

Based on the foregoing technical means, in this application, when the obtained voltage at the first end of the power management unit is greater than the voltage at the second end of the power management unit, it may be determined that a current direction is flowing from the first end of the power management unit to the second end of the power management unit, which indicates that the fault point is located in the second low-voltage loop. Further, whether the fault point is located in the second low-voltage loop can be accurately determined by using the voltage between the two ends of the power management unit.

In a possible implementation, the determining an on/off state of the power management unit based on a current existing in the low-voltage loop after the direct-current converter is in an open state includes: after the direct-current converter is in an open state, if the current in the low-voltage loop is greater than the preset current, controlling the power management unit to be in an open state; and after the direct-current converter is in an open state, if the current in the low-voltage loop is less than the preset current, controlling the power management unit to be in a closed state.

Based on the foregoing technical means, in this application, after the direct-current converter is in an open state, whether the fault point is located in the first low-voltage loop or the direct-current converter can be determined by using the current in the low-voltage loop. In this way, when the current in the low-voltage loop is greater than the preset current, that is, the fault point is located in the first low-voltage loop, the power management unit is controlled to be in an open state, so that the second low-voltage loop can work normally. In addition, when the current in the low-voltage loop is less than the preset current, that is, the fault point is located in the direct-current converter, the power management unit is controlled to be in a closed state, so that the first low-voltage loop and the second low-voltage loop can work normally.

In a possible implementation, the foregoing method further includes: when a voltage in the low-voltage loop is greater than a preset voltage, controlling the direct-current converter to be in an open state, and determining the on/off state of the power management unit based on a voltage existing in the low-voltage loop after the direct-current converter is in an open state.

Based on the foregoing technical means, in this application, when the voltage in the low-voltage loop is greater than the preset voltage, it can be determined that an overvoltage fault occurs in the low-voltage circuit control system. Further, the direct-current converter is controlled to be in an open state, and whether an overvoltage fault point of the low-voltage circuit control system is located in the direct-current converter may be determined based on the voltage existing in the low-voltage loop after the direct-current converter is in an open state, to determine the on/off state of the power management unit, so that the low-voltage circuit control system works normally.

In a possible implementation, the determining the on/off state of the power management unit based on a voltage existing in the low-voltage loop after the direct-current converter is in an open state includes: after the direct-current converter is in an open state, if the voltage in the low-voltage loop is greater than the preset voltage, controlling the power management unit to be in an open state; and after the direct-current converter is in an open state, if the voltage in the low-voltage loop is less than the preset voltage, controlling the power management unit to be in a closed state.

Based on the foregoing technical means, in this application, after the direct-current converter is in an open state, if the voltage in the low-voltage loop is less than the preset voltage, it indicates that the overvoltage fault point is located in the direct-current converter. In this way, the power management unit is controlled to be in a closed state, so that the first low-voltage loop and the second low-voltage loop work normally.

According to a second aspect provided in this application, a low-voltage circuit control apparatus is provided, and the low-voltage circuit control apparatus is applied to a power management unit in a low-voltage circuit control system. The low-voltage circuit control system further includes a direct-current converter and a low-voltage loop; the low-voltage loop includes a first low-voltage loop and a second low-voltage loop; the power management unit is configured to control on/off of the second low-voltage loop; the direct-current converter is configured to: supply power to a load in the first low-voltage loop, and when the power management unit is in a closed state, supply power to a load in the second low-voltage loop; the second low-voltage loop further includes a battery; and the battery is configured to: supply power to the load in the second low-voltage loop when the power management unit is in an open state, and supply power to the load in the first low-voltage loop and the load in the second low-voltage loop when the power management unit is in a closed state and the direct-current converter is in an open state. The low-voltage circuit control apparatus includes a determining unit, a processing unit, and a control unit. The determining unit is configured to determine, based on a voltage between two ends of the power management unit when a current in the low-voltage loop is greater than a preset current, whether a fault point of the low-voltage circuit control system is located in the second low-voltage loop. The processing unit is configured to: when the fault point is not located in the second low-voltage loop, control the direct-current converter to be in an open state, and determine an on/off state of the power management unit based on a current existing in the low-voltage loop after the direct-current converter is in an open state. The control unit is configured to: when the fault point is located in the second low-voltage loop, control the power management unit to be in an open state.

In a possible implementation, a first end of the power management unit is separately connected to the direct-current converter and the first low-voltage loop, and a second end of the power management unit is connected to the second low-voltage loop; and the determining unit is specifically configured to: when the current in the low-voltage loop is greater than the preset current and a voltage at the first end of the power management unit is greater than a voltage at the second end of the power management unit, determine that the fault point is located in the second low-voltage loop; and when the current in the low-voltage loop is greater than the preset current and the voltage at the first end of the power management unit is less than the voltage at the second end of the power management unit, determine that the fault point is not located in the second low-voltage loop.

In a possible implementation, the processing unit is specifically configured to: after the direct-current converter is in an open state, if the current in the low-voltage loop is greater than the preset current, control the power management unit to be in an open state; and after the direct-current converter is in an open state, if the current in the low-voltage loop is less than the preset current, control the power management unit to be in a closed state.

In a possible implementation, the processing unit is further configured to: when a voltage in the low-voltage loop is greater than a preset voltage, control the direct-current converter to be in an open state, and determine the on/off state of the power management unit based on a voltage existing in the low-voltage loop after the direct-current converter is in an open state.

In a possible implementation, the processing unit is specifically configured to: after the direct-current converter is in an open state, if the voltage in the low-voltage loop is greater than the preset voltage, control the power management unit to be in an open state; and after the direct-current converter is in an open state, if the voltage in the low-voltage loop is less than the preset voltage, control the power management unit to be in a closed state.

According to a third aspect provided in this application, an electronic device is provided, and includes a processor and a memory configured to store instructions executable by the processor. The processor is configured to execute the instructions, to implement the method according to the first aspect and any possible implementation of the first aspect.

According to a fourth aspect provided in this application, a computer-readable storage medium is provided. When instructions in the computer-readable storage medium are executed by a processor of an electronic device, the electronic device is enabled to perform the method according to the first aspect and any possible implementation of the first aspect.

According to a fifth aspect provided in this application, a low-voltage circuit control system is provided and includes a direct-current converter, a low-voltage loop, and a power management unit that performs the method according to the first aspect and any possible implementation of the first aspect. The low-voltage loop includes a first low-voltage loop and a second low-voltage loop; the power management unit is configured to control on/off of the second low-voltage loop; the direct-current converter is configured to: supply power to a load in the first low-voltage loop, and when the power management unit is in a closed state, supply power to a load in the second low-voltage loop; the second low-voltage loop further includes a battery; and the battery is configured to: supply power to the load in the second low-voltage loop when the power management unit is in an open state, and supply power to the load in the first low-voltage loop and the load in the second low-voltage loop when the power management unit is in a closed state and the direct-current converter is in an open state.

According to a sixth aspect provided in this application, a computer program product is provided. The computer program product includes computer instructions, and when the computer instructions run on an electronic device, the electronic device is enabled to perform the method according to the first aspect and any possible implementation of the first aspect.

Therefore, the foregoing technical features of this application have the following beneficial effects:
(1) When the fault point is not located in the second low-voltage loop, the current existing in the low-voltage loop after the direct-current converter is in an open state may be used to determine whether the fault point of the low-voltage circuit control system is located in the direct-current converter and determine the on/off state of the power management unit, so that at least the second low-voltage loop can work normally. In this way, a vehicle can still enter a safe state when the low-voltage circuit control system is faulty. When the fault point is located in the second low-voltage loop, the power management unit is controlled to be in an open state. In this way, the first low-voltage loop can work normally, so that the vehicle can still enter the safe state when the low-voltage circuit control system is faulty. In addition, the low-voltage circuit control method proposed in this application is applied to the power management unit in the low-voltage circuit control system, the low-voltage circuit control system further includes the direct-current converter, the first low-voltage loop, and the second low-voltage loop, and the second low-voltage loop further includes the battery. In this way, manufacturing costs can be effectively reduced by disposing a single direct-current converter and a single battery.
(2) When the obtained voltage at the first end of the power management unit is greater than the voltage at the second end of the power management unit, it may be determined that a current direction is flowing from the first end of the power management unit to the second end of the power management unit, which indicates that the fault point is located in the second low-voltage loop. Further, whether the fault point is located in the second low-voltage loop can be accurately determined by using the voltage between the two ends of the power management unit.
(3) When the current in the low-voltage loop is greater than the preset current, that is, the fault point is located in the first low-voltage loop, the power management unit is controlled to be in an open state, so that the second low-voltage loop can work normally. In addition, when the current in the low-voltage loop is less than the preset current, that is, the fault point is located in the direct-current converter, the power management unit is controlled to be in a closed state, so that the first low-voltage loop and the second low-voltage loop can work normally.
(4) Whether an overvoltage fault point of the low-voltage circuit control system is located in the direct-current converter may be determined, to determine the on/off state of the power management unit, so that the low-voltage circuit control system works normally.
(5) After the direct-current converter is in an open state, if the voltage in the low-voltage loop is less than the preset voltage, it indicates that the overvoltage fault point is located in the direct-current converter. In this way, the power management unit is controlled to be in a closed state, so that the first low-voltage loop and the second low-voltage loop work normally.

It should be noted that, for technical effects brought by any implementation in the second aspect to the sixth aspect, reference may be made to technical effects brought by a corresponding implementation in the first aspect, and details are not described herein again.

It should be understood that the foregoing general descriptions and the following detailed descriptions are merely examples and explanations, and cannot limit this application.

### BRIEF DESCRIPTION OF DRAWINGS

The accompanying drawings herein are incorporated in this specification, constitute a part of this specification, show embodiments in accordance with this application, and are used with this specification to explain a principle of this application, but do not constitute improper limitations on this application.
FIG. 1 is a schematic diagram of a structure of a low-voltage circuit control system according to an example embodiment;
FIG. 2 is a flowchart of a low-voltage circuit control method according to an example embodiment;
FIG. 3 is a flowchart of another low-voltage circuit control method according to an example embodiment;
FIG. 4 is a flowchart of another low-voltage circuit control method according to an example embodiment;
FIG. 5 is a block diagram of a low-voltage circuit control apparatus according to an example embodiment; and
FIG. 6 is a block diagram of an electronic device according to an example embodiment.

### DESCRIPTION OF EMBODIMENTS

To enable a person of ordinary skill in the art to better understand the technical solutions of this application, the following clearly and completely describes the technical solutions in the embodiments of this application with reference to the accompanying drawings.

It should be noted that the terms "first", "second", and the like in the specification and claims of this application are intended to distinguish between different objects, but not to describe a specific order or sequence. It should be understood that data used in such a way are interchangeable in proper cases, so that the embodiments of this application described herein can be implemented in an order other than those shown in the figure or described. Implementations described in the following example embodiments do not represent all implementations consistent with this application, but merely examples of an apparatus and a method that are consistent with some aspects of this application, as described in detail in the appended claims.

Before a low-voltage circuit control method provided in this application is described in detail, an implementation environment (an implementation architecture) involved in this application is briefly described first.

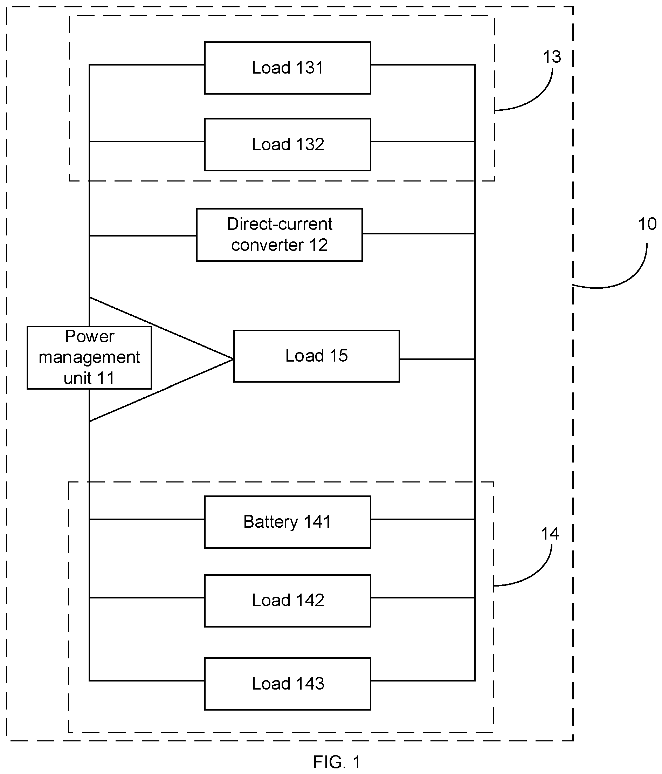

The low-voltage circuit control method provided in the embodiments of this application may be applicable to a power management unit in a low-voltage circuit control system. FIG. 1 is a schematic diagram of a structure of a low-voltage circuit control system 10. As shown in FIG. 1, the low-voltage circuit control system 10 includes a power management unit 11, a direct-current converter 12, a first low-voltage loop 13, a second low-voltage loop 14, and a load (a load 15 is shown in FIG. 1 as an example, and in an actual application process, more or fewer loads may exist, which is not limited in this application).

A low-voltage loop includes the first low-voltage loop 13 and the second low-voltage loop 14. A first end of the power management unit 11 is separately connected to the direct-current converter 12 and the first low-voltage loop 13, and a second end of the power management unit 11 is connected to the second low-voltage loop 14. The first low-voltage loop 13 includes a load (a load 131 and a load 132 are shown in FIG. 1 as an example, and in an actual application process, more or fewer loads may exist, which is not limited in this application), and the second low-voltage loop 14 includes a battery 141 and a load (a load 142 and a load 143 are shown in FIG. 1 as an example, and in an actual application process, more or fewer loads may exist, which is not limited in this application).

The power management unit 11 is configured to control on/off of the second low-voltage loop 14.

The direct-current converter 12 is configured to: supply power to the load in the first low-voltage loop 13, and when the power management unit 11 is in a closed state, supply power to the load in the second low-voltage loop 14.

The battery 15 is configured to: supply power to the load in the second low-voltage loop 14 when the power management unit 11 is in an open state, and supply power to the load in the first low-voltage loop 14 and the load in the second low-voltage loop 12 when the power management unit 11 is in a closed state and the direct-current converter 12 is in an open state.

In actual application, the low-voltage circuit control system provided in this embodiment of this application may be applicable to a system that has a dual-path low-voltage power supply requirement. For a single-controller system, a single controller may be connected to both the first low-voltage loop and the second low-voltage loop, for example, the load 15 shown in FIG. 1. For a dual-controller system, two controllers may be respectively connected to the first low-voltage loop and the second low-voltage loop, for example, the load 131 and the load 142 shown in FIG. 1.

In actual application, because a high-voltage management controller is configured to activate a high-voltage state of an entire vehicle, and normal working of the direct-current converter depends on the high-voltage state of the entire vehicle, a high-voltage manager is usually disposed in the first low-voltage loop.

For ease of understanding, the low-voltage circuit control method provided in this application is specifically described below with reference to the accompanying drawings.

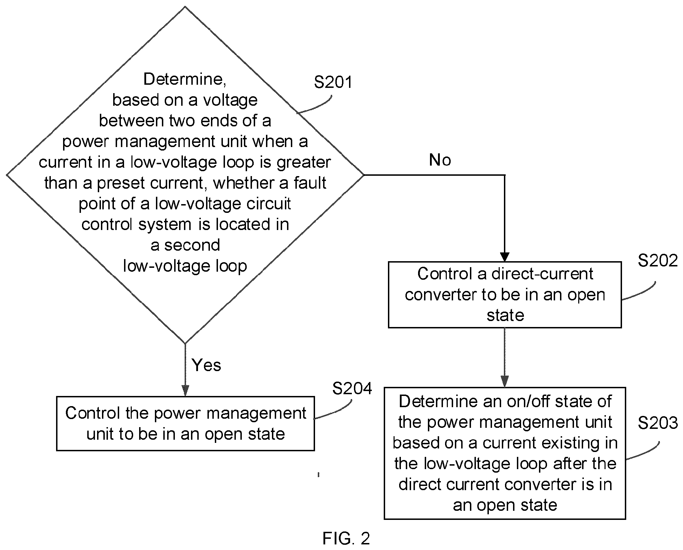

FIG. 2 is a flowchart of a low-voltage circuit control method according to an example embodiment. The low-voltage circuit control method may be applied to a power management unit in a low-voltage circuit control system. As shown in FIG. 2, the low-voltage circuit control method includes the following steps.

S201: The power management unit determines, based on a voltage between two ends of the power management unit when a current in a low-voltage loop is greater than a preset current, whether a fault point of the low-voltage circuit control system is located in a second low-voltage loop.

In a possible implementation, the power management unit obtains the current in the low-voltage loop, and obtains the voltage between the two ends of the power management unit when the current in the low-voltage loop is greater than the preset current. Further, the power management unit determines, based on the voltage between the two ends of the power management unit, whether the fault point of the low-voltage circuit control system is located in the second low-voltage loop.

In actual application, the power management unit may be a power management unit, or the power management unit may be a hardware network separator (hardware network separator, HNS). A metal-oxide-semiconductor field-effect transistor (metal-oxide-semiconductor field-effect transistor, MOSFET) is built in the power management unit. A direct-current converter may be (direct current, DC/DC).

For a specific implementation of this step, reference may be made to subsequent descriptions in this embodiment of this application, and details are not described herein again.

S202: When the fault point is not located in the second low-voltage loop, the power management unit controls the direct-current converter to be in an open state.

S203: The power management unit determines an on/off state of the power management unit based on a current existing in the low-voltage loop after the direct-current converter is in an open state.

In a possible implementation, after controlling the direct-current converter to be in an open state, the power management unit obtains the current in the low-voltage loop again, and determines the on/off state of the power management unit based on the current in the low-voltage loop.

For a specific implementation of this step, reference may be made to subsequent descriptions in this embodiment of this application, and details are not described herein again.

S204: When the fault point is located in the second low-voltage loop, the power management unit controls the power management unit to be in an open state.

It may be understood that, when the current in the low-voltage loop is greater than the preset current, it may be determined that the low-voltage loop is in an overcurrent state, that is, the low-voltage circuit control system is faulty. Then, whether the fault point of the low-voltage circuit control system is located in the second low-voltage loop may be determined based on the voltage between the two ends of the power management unit. Further, when the fault point is not located in the second low-voltage loop, the current existing in the low-voltage loop after the direct-current converter is in an open state may be used to determine whether the fault point of the low-voltage circuit control system is located in the direct-current converter and determine the on/off state of the power management unit, so that at least the second low-voltage loop can work normally. In this way, a vehicle can still enter a safe state when the low-voltage circuit control system is faulty. When the fault point is located in the second low-voltage loop, the power management unit is controlled to be in an open state. In this way, the first low-voltage loop can work normally, so that the vehicle can still enter the safe state when the low-voltage circuit control system is faulty. In addition, the low-voltage circuit control method proposed in this application is applied to the power management unit in the low-voltage circuit control system, the low-voltage circuit control system further includes the direct-current converter, the first low-voltage loop, and the second low-voltage loop, and the second low-voltage loop further includes a battery. In this way, manufacturing costs can be effectively reduced by disposing a single direct-current converter and a single battery.

In some embodiments, a first end of the power management unit is separately connected to the direct-current converter and the first low-voltage loop, and a second end of the power management unit is connected to the second low-voltage loop. To accurately determine whether the fault point is located in the second low-voltage loop, S201 may be implemented in the following manner.

S301: When the current in the low-voltage loop is greater than the preset current and a voltage at the first end of the power management unit is greater than a voltage at the second end of the power management unit, the power management unit determines that the fault point is located in the second low-voltage loop.

In a possible implementation, the power management unit obtains the voltage between the two ends of the power management unit when the current in the low-voltage loop is greater than the preset current. Then, when the voltage at the first end of the power management unit is greater than the voltage at the second end of the power management unit, the power management unit determines that the fault point is located in the second low-voltage loop.

S302: When the current in the low-voltage loop is greater than the preset current and the voltage at the first end of the power management unit is less than the voltage at the second end of the power management unit, the power management unit determines that the fault point is not located in the second low-voltage loop.

In a possible implementation, the power management unit obtains the voltage between the two ends of the power management unit when the current in the low-voltage loop is greater than the preset current. Then, when the voltage at the first end of the power management unit is less than the voltage at the second end of the power management unit, the power management unit determines that the fault point is not located in the second low-voltage loop.

It may be understood that the first end of the power management unit is separately connected to the direct-current converter and the first low-voltage loop, and the second end of the power management unit is connected to the second low-voltage loop. In this way, when the obtained voltage at the first end of the power management unit is greater than the voltage at the second end of the power management unit, it may be determined that a current direction is flowing from the first end of the power management unit to the second end of the power management unit, which indicates that the fault point is located in the second low-voltage loop. Further, whether the fault point is located in the second low-voltage loop can be accurately determined by using the voltage between the two ends of the power management unit.

In some embodiments, to determine whether the fault point is located in the first low-voltage loop, S203 may be implemented in the following manner:
S401: After the direct-current converter is in an open state, if the current in the low-voltage loop is greater than the preset current, the power management unit controls the power management unit to be in an open state.

In a possible implementation, after the direct-current converter is in an open state, the power management unit obtains the current in the low-voltage loop again. Then, when the current in the low-voltage loop is greater than the preset current, the power management unit controls the power management unit to be in an open state.

S402: After the direct-current converter is in an open state, if the current in the low-voltage loop is less than the preset current, the power management unit controls the power management unit to be in a closed state.

In a possible implementation, after the direct-current converter is in an open state, the power management unit obtains the current in the low-voltage loop again. Then, when the current in the low-voltage loop is less than the preset current, the power management unit controls the power management unit to be in a closed state.

It may be understood that, after the direct-current converter is in an open state, whether the fault point is located in the first low-voltage loop or the direct-current converter may be determined by using the current in the low-voltage loop. In this way, when the current in the low-voltage loop is greater than the preset current, that is, the fault point is located in the first low-voltage loop, the power management unit is controlled to be in an open state, so that the second low-voltage loop can work normally. In addition, when the current in the low-voltage loop is less than the preset current, that is, the fault point is located in the direct-current converter, the power management unit is controlled to be in a closed state, so that the first low-voltage loop and the second low-voltage loop can work normally.

In some embodiments, when an overvoltage fault occurs in the low-voltage circuit control system, to control the low-voltage circuit control system to work normally, the low-voltage circuit control method provided in this embodiment of this application further includes the following steps.

S501: When a voltage in the low-voltage loop is greater than a preset voltage, the power management unit controls the direct-current converter to be in an open state.

In a possible implementation, the power management unit obtains the voltage in the low-voltage loop, and sends an off signal to the direct-current converter via a controller area network (controller area network, CAN) when the voltage in the low-voltage loop is greater than the preset voltage, to control the direct-current converter to be in an open state.

S502: The power management unit determines an on/off state of the power management unit based on a voltage existing in the low-voltage loop after the direct-current converter is in an open state.

It may be understood that, when the voltage in the low-voltage loop is greater than the preset voltage, it may be determined that an overvoltage fault occurs in the low-voltage circuit control system. Further, the direct-current converter is controlled to be in an open state, and whether an overvoltage fault point of the low-voltage circuit control system is located in the direct-current converter may be determined based on the voltage existing in the low-voltage loop after the direct-current converter is in an open state, to determine the on/off state of the power management unit, so that the low-voltage circuit control system works normally.

In some embodiments, when the overvoltage fault point is located in the direct-current converter, to control the low-voltage circuit control system to work normally, step S502 may be implemented in the following manner.

S601: After the direct-current converter is in an open state, if the voltage in the low-voltage loop is greater than the preset voltage, the power management unit controls the power management unit to be in an open state.

In a possible implementation, after the direct-current converter is in an open state, the power management unit obtains the voltage in the low-voltage loop. Then, when the voltage in the low-voltage loop is greater than the preset voltage, the power management unit controls the power management unit to be in an open state.

S602: After the direct-current converter is in an open state, if the voltage in the low-voltage loop is less than the preset voltage, the power management unit controls the power management unit to be in a closed state.

In a possible implementation, after the direct-current converter is in an open state, the power management unit obtains the voltage in the low-voltage loop. Then, when the voltage in the low-voltage loop is less than the preset voltage, the power management unit controls the power management unit to be in a closed state.

It may be understood that, after the direct-current converter is in an open state, if the voltage in the low-voltage loop is less than the preset voltage, it indicates that the overvoltage fault point is located in the direct-current converter. In this way, the power management unit is controlled to be in a closed state, so that the first low-voltage loop and the second low-voltage loop work normally.

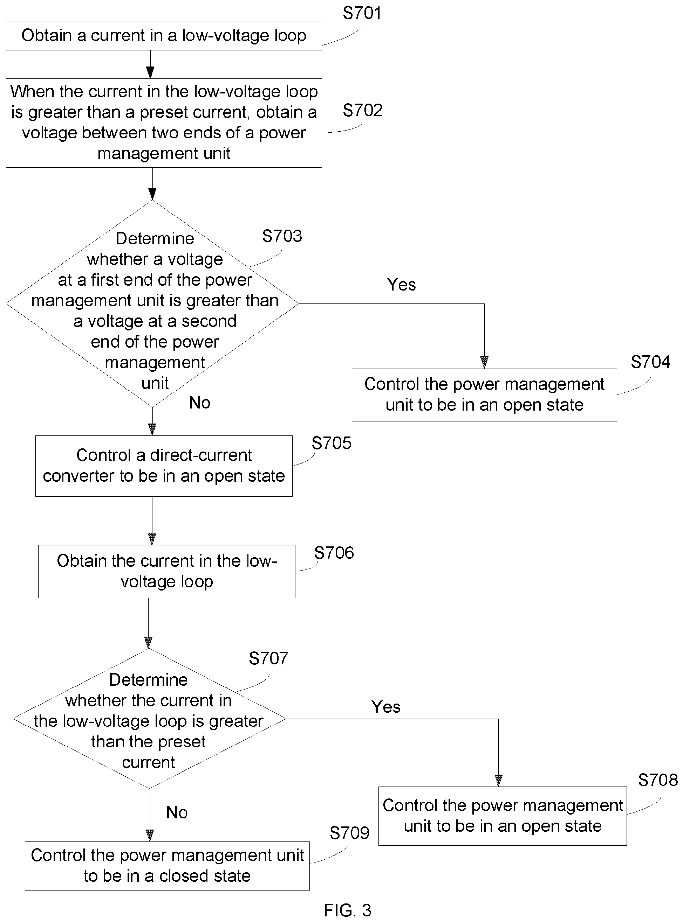

In some embodiments, when the low-voltage circuit control system is in an overcurrent state, to control the low-voltage circuit control system at low costs to work normally, as shown in FIG. 3, the low-voltage circuit control method provided in this embodiment of this application may be alternatively implemented in the following manner.

S701: The power management unit obtains a current in the low-voltage loop.

S702: When the current in the low-voltage loop is greater than a preset current, the power management unit obtains a voltage between two ends of the power management unit.

S703: The power management unit determines whether a voltage at a first end of the power management unit is greater than a voltage at a second end of the power management unit.

S704: When the voltage at the first end of the power management unit is greater than the voltage at the second end of the power management unit, the power management unit controls the power management unit to be in an open state.

S705: When the voltage at the first end of the power management unit is less than the voltage at the second end of the power management unit, the power management unit controls the direct-current converter to be in an open state.

S706: The power management unit obtains the current in the low-voltage loop.

S707: The power management unit determines whether the current in the low-voltage loop is greater than the preset current.

S708: When the current in the low-voltage loop is greater than the preset current, the power management unit controls the power management unit to be in an open state.

S709: When the current in the low-voltage loop is less than the preset current, the power management unit controls the power management unit to be in a closed state.

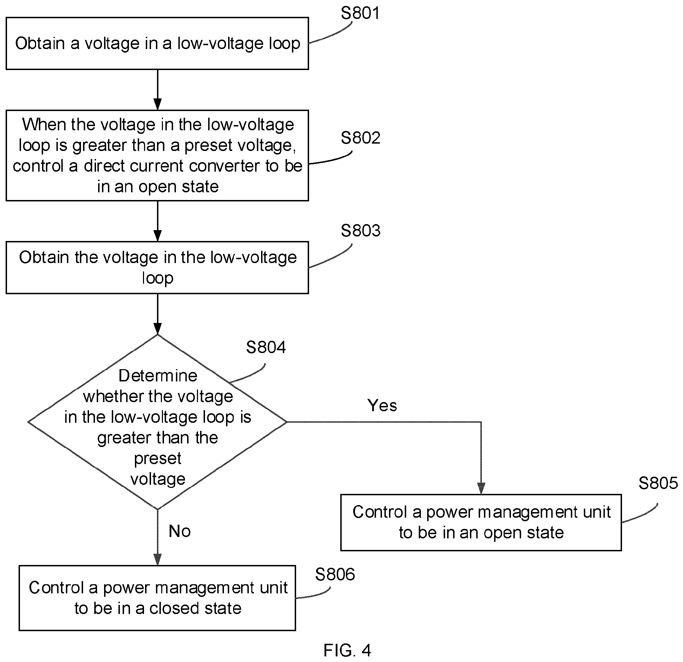

In some embodiments, when the low-voltage circuit control system is in an overvoltage state, to control the low-voltage circuit control system at low costs to work normally, as shown in FIG. 4, the low-voltage circuit control method provided in this embodiment of this application may be alternatively implemented in the following manner.

S801: The power management unit obtains a voltage in the low-voltage loop.

S802: When the voltage in the low-voltage loop is greater than a preset voltage, the power management unit controls the direct-current converter to be in an open state.

S803: The power management unit obtains the voltage in the low-voltage loop.

S804: The power management unit determines whether the voltage in the low-voltage loop is greater than the preset voltage.

S805: When the voltage in the low-voltage loop is greater than the preset voltage, the power management unit controls the power management unit to be in an open state.

S806: When the voltage in the low-voltage loop is less than the preset voltage, the power management unit controls the power management unit to be in a closed state.

The solutions provided in the embodiments of this application are described above mainly from a method perspective. To implement the foregoing functions, a low-voltage circuit control apparatus, an electronic device, or a power management unit includes corresponding hardware structures and/or software modules for performing the functions. A person skilled in the art should readily recognize that, with reference to the units and algorithm steps in the examples described in the embodiments disclosed in this specification, this application can be implemented by using hardware or a combination of hardware and computer software. Whether a function is performed by using hardware or computer software-driven hardware depends on a specific application and design constraint condition of the technical solutions. A person skilled in the art may use different methods for each specific application to implement the described functions, but such an implementation should not be considered to be beyond the scope of this application.

In the embodiments of this application, the low-voltage circuit control apparatus, the electronic device, or the power management unit may be divided into functional modules as an example according to the foregoing method. For example, the low-voltage circuit control apparatus, the electronic device, or the power management unit may include functional modules corresponding to functions that are obtained through division, or two or more functions may be integrated into one processing module. The integrated module may be implemented in a form of hardware or in a form of a software functional module. It should be noted that division into modules in the embodiments of this application is an example, and is merely logical function division. In actual implementation, there may be another division manner.

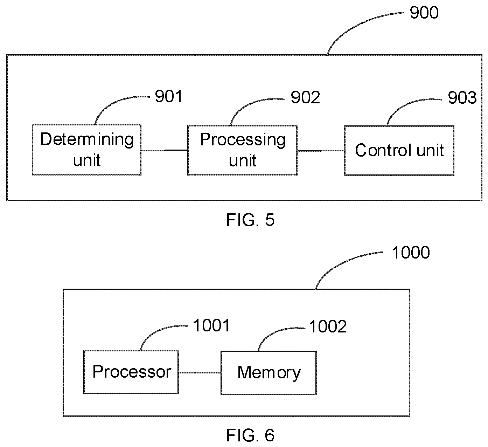

FIG. 5 is a block diagram of a low-voltage circuit control apparatus according to an example embodiment. The low-voltage circuit control apparatus 900 may be applied to a power management unit in a low-voltage circuit control system. As shown in FIG. 5, the low-voltage circuit control apparatus 900 includes a determining unit 901, a processing unit 902, and a control unit 903.

The determining unit 901 is configured to determine, based on a voltage between two ends of the power management unit when a current in a low-voltage loop is greater than a preset current, whether a fault point of the low-voltage circuit control system is located in a second low-voltage loop.

The processing unit 902 is configured to: when the fault point is not located in the second low-voltage loop, control a direct-current converter to be in an open state, and determine an on/off state of the power management unit based on a current existing in the low-voltage loop after the direct-current converter is in an open state.

The control unit 903 is configured to: when the fault point is located in the second low-voltage loop, control the power management unit to be in an open state.

Optionally, a first end of the power management unit is separately connected to the direct-current converter and a first low-voltage loop, and a second end of the power management unit is connected to the second low-voltage loop. To accurately determine whether the fault point is located in the second low-voltage loop, as shown in FIG. 5, the determining unit 901 is specifically configured to:
when the current in the low-voltage loop is greater than the preset current and a voltage at the first end of the power management unit is greater than a voltage at the second end of the power management unit, determine that the fault point is located in the second low-voltage loop; and
when the current in the low-voltage loop is greater than the preset current and the voltage at the first end of the power management unit is less than the voltage at the second end of the power management unit, determine that the fault point is not located in the second low-voltage loop.

Optionally, to accurately determine whether the fault point is located in the first low-voltage loop, as shown in FIG. 5, the processing unit 902 is specifically configured to:
after the direct-current converter is in an open state, if the current in the low-voltage loop is greater than the preset current, control the power management unit to be in an open state; and
after the direct-current converter is in an open state, if the current in the low-voltage loop is less than the preset current, control the power management unit to be in a closed state.

Optionally, when an overvoltage fault occurs in the low-voltage circuit control system, to control the low-voltage circuit control system to work normally, as shown in FIG. 5, the processing unit 902 is further configured to:
when a voltage in the low-voltage loop is greater than a preset voltage, control the direct-current converter to be in an open state, and determine the on/off state of the power management unit based on a voltage existing in the low-voltage loop after the direct-current converter is in an open state.

Optionally, when an overvoltage fault point is located in the direct-current converter, to control the low-voltage circuit control system to work normally, as shown in FIG. 5, the processing unit 902 is specifically configured to:
after the direct-current converter is in an open state, if the voltage in the low-voltage loop is greater than the preset voltage, control the power management unit to be in an open state; and
after the direct-current converter is in an open state, if the voltage in the low-voltage loop is less than the preset voltage, control the power management unit to be in a closed state.

For the apparatus in the foregoing embodiment, a specific manner in which each module performs an operation has been described in detail in the embodiment of the method. Details are not described herein.

FIG. 6 is a block diagram of an electronic device according to an example embodiment. As shown in FIG. 6, an electronic device 1000 includes but is not limited to a processor 1001 and a memory 1002.

The memory 1002 is configured to store instructions executable by the processor 1001. It may be understood that the processor 1001 is configured to execute the instructions, to implement the low-voltage circuit control method in the foregoing embodiment.

It should be noted that a person skilled in the art may understand that a structure of the electronic device shown in FIG. 6 does not constitute a limitation on the electronic device. The electronic device may include more or fewer components than those shown in FIG. 6, or combine some components, or have different component arrangements.

The processor 1001 is a control center of the electronic device, and is connected to all parts of the entire electronic device by using various interfaces and lines, and performs various functions of the electronic device and processes data by running or executing a software program stored in the memory 1002 and/or a module and invoking data stored in the memory 1002, to perform overall monitoring on the electronic device. The processor 1001 may include one or more processing units. Optionally, the processor 1001 may be integrated with an application processor and a modem processor. The application processor mainly processes an operating system, a user interface, an application program, and the like, and the modem processor mainly processes wireless communication. It may be understood that the modem processor may alternatively not be integrated into the processor 1001.

The memory 1002 may be configured to store a software program and various data. The memory 1002 may mainly include a program storage area and a data storage area. The program storage area may store an operating system, an application program required by at least one functional module (such as the determining unit 901, the processing unit 902, and the control unit 903), and the like. In addition, the memory 1002 may include a high-speed random access memory, and may further include a non-volatile memory, such as at least one magnetic disk storage device, a flash memory device, or another volatile solid-state storage device.

In an example embodiment, a computer-readable storage medium including instructions is further provided, for example, the memory 1002 including instructions. The instructions may be executed by the processor 1001 of the electronic device 1000, to implement the low-voltage circuit control method in the foregoing embodiments.

In actual implementation, functions of the determining unit 901, the processing unit 902, and the control unit 903 in FIG. 5 may all be implemented by the processor 1001 in FIG. 6 by invoking a computer program stored in the memory 1002. For a specific execution process, reference may be made to the descriptions of the low-voltage circuit control method part in the foregoing embodiments. Details are not described herein again.

Optionally, the computer-readable storage medium may be a non-transitory computer-readable storage medium. For example, the non-transitory computer-readable storage medium may be a read-only memory (read-only memory, ROM), a random access memory (random access memory, RAM), a CD-ROM, a magnetic tape, a floppy disk, or an optical data storage device.

In an example embodiment, an embodiment of this application further provides a low-voltage circuit control system. The low-voltage circuit control system includes a power replenishment module, a battery, and a controller that performs the method according to the first aspect and any possible implementation of the first aspect, and the controller is separately connected to the power replenishment module and the battery in parallel.

In an example embodiment, an embodiment of this application further provides a computer program product including one or more instructions, and the one or more instructions may be executed by a processor of an electronic device, to complete the low-voltage circuit control method in the foregoing embodiments.

It should be noted that, when the instructions in the computer-readable storage medium or the one or more instructions in the computer program product are executed by the processor of the electronic device, the processes in the embodiment of the foregoing low-voltage circuit control method can be implemented, and a technical effect that is the same as that of the foregoing low-voltage circuit control method can be achieved. To avoid repetition, details are not described herein again.

According to the descriptions of the foregoing implementations, a person skilled in the art may clearly understand that, for convenience and brevity of description, only division into the foregoing functional modules is used as an example for description. In actual application, the foregoing functions may be allocated to different functional modules for completion according to a requirement, that is, an internal structure of the apparatus is divided into different functional modules, to complete all or some of the foregoing functions.

In the several embodiments provided in this application, it should be understood that the disclosed apparatus and method may be implemented in another manner. For example, the apparatus embodiment described above is merely an example. For example, division into modules or units is merely logical function division. In actual implementation, there may be another division manner. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may be or may not be physically separated. The components shown as units may be one physical unit or a plurality of physical units, that is, the components may be located at one place or may be distributed at a plurality of different places. Some or all of the units may be selected according to actual needs to achieve the purpose of the solutions in the embodiments.

In addition, functional units in the embodiments of this application may be integrated into one processing unit, or each of the units may exist alone physically, or two or more units are integrated into one unit. The integrated unit may be implemented in a form of hardware or in a form of a software functional unit.

When the integrated unit is implemented in the form of a software functional unit and is sold or used as an independent product, the integrated unit may be stored in a readable storage medium. Based on such an understanding, the technical solutions of the embodiments of this application essentially, or the part contributing to the conventional technology, or all or some of the technical solutions may be implemented in a form of a software product. The software product is stored in a storage medium, and includes several instructions for instructing a device (which may be a single-chip microcomputer, a chip, or the like) or a processor (processor) to perform all or some of the steps of the method in the embodiments of this application. The foregoing storage medium includes various mediums that can store program code, such as a USB flash drive, a removable hard disk, a ROM, a RAM, a magnetic disk, or an optical disc.

The foregoing descriptions are merely specific implementations of this application, but the protection scope of this application is not limited thereto. Any change or replacement within the technical scope disclosed in this application shall fall within the protection scope of this application. Therefore, the protection scope of this application shall be subjected to the protection scope of the appended claims.

## Claims

1. A low-voltage circuit control method, applied to a power management unit in a low-voltage circuit control system, wherein the low-voltage circuit control system further comprises a direct-current converter and a low-voltage loop, and the low-voltage loop comprises a first low-voltage loop and a second low-voltage loop; the power management unit is configured to control on/off of the second low-voltage loop; the direct-current converter is configured to: supply power to a load in the first low-voltage loop, and when the power management unit is in a closed state, supply power to a load in the second low-voltage loop; the second low-voltage loop further comprises a battery; and the battery is configured to: supply power to the load in the second low-voltage loop when the power management unit is in an open state, and supply power to the load in the first low-voltage loop and the load in the second low-voltage loop when the power management unit is in a closed state and the direct-current converter is in an open state; and the method comprises:
determining, based on a voltage between two ends of the power management unit when a current in the low-voltage loop is greater than a preset current, whether a fault point of the low-voltage circuit control system is located in the second low-voltage loop;
when the fault point is not located in the second low-voltage loop, controlling the direct-current converter to be in an open state, and determining an on/off state of the power management unit based on a current existing in the low-voltage loop after the direct-current converter is in the open state; and
when the fault point is located in the second low-voltage loop, controlling the power management unit to be in an open state.

2. The method according to claim 1, wherein a first end of the power management unit is separately connected to the direct-current converter and the first low-voltage loop, and a second end of the power management unit is connected to the second low-voltage loop; and determining, based on the voltage between two ends of the power management unit when the current in the low-voltage loop is greater than the preset current, whether the fault point of the low-voltage circuit control system is located in the second low-voltage loop comprises:
when the current in the low-voltage loop is greater than the preset current and a voltage at the first end of the power management unit is greater than a voltage at the second end of the power management unit, determining that the fault point is located in the second low-voltage loop; and
when the current in the low-voltage loop is greater than the preset current and the voltage at the first end of the power management unit is less than the voltage at the second end of the power management unit, determining that the fault point is not located in the second low-voltage loop.

3. The method according to claim 1, wherein determining the on/off state of the power management unit based on the current existing in the low-voltage loop after the direct-current converter is in the open state comprises:
after the direct-current converter is in the open state, if the current in the low-voltage loop is greater than the preset current, controlling the power management unit to be in an open state; and
after the direct-current converter is in the open state, if the current in the low-voltage loop is less than the preset current, controlling the power management unit to be in a closed state.

4. The method according to any one of claims 1 to 3, wherein the method further comprises:
when a voltage in the low-voltage loop is greater than a preset voltage, controlling the direct-current converter to be in an open state, and determining the on/off state of the power management unit based on a voltage existing in the low-voltage loop after the direct-current converter is in the open state.

5. The method according to claim 4, wherein determining the on/off state of the power management unit based on the voltage existing in the low-voltage loop after the direct-current converter is in the open state comprises:
after the direct-current converter is in the open state, if the voltage in the low-voltage loop is greater than the preset voltage, controlling the power management unit to be in an open state; and
after the direct-current converter is in the open state, if the voltage in the low-voltage loop is less than the preset voltage, controlling the power management unit to be in a closed state.

6. A low-voltage circuit control apparatus, applied to a power management unit in a low-voltage circuit control system, wherein the low-voltage circuit control system further comprises a direct-current converter and a low-voltage loop; the low-voltage loop comprises a first low-voltage loop and a second low-voltage loop; the power management unit is configured to control on/off of the second low-voltage loop; the direct-current converter is configured to: supply power to a load in the first low-voltage loop, and when the power management unit is in a closed state, supply power to a load in the second low-voltage loop; the second low-voltage loop further comprises a battery; and the battery is configured to:
supply power to the load in the second low-voltage loop when the power management unit is in an open state, and supply power to the load in the first low-voltage loop and the load in the second low-voltage loop when the power management unit is in a closed state and the direct-current converter is in an open state;
the low-voltage circuit control apparatus comprises a determining unit, a processing unit, and a control unit;
the determining unit is configured to determine, based on a voltage between two ends of the power management unit when a current in the low-voltage loop is greater than a preset current, whether a fault point of the low-voltage circuit control system is located in the second low-voltage loop;
the processing unit is configured to: when the fault point is not located in the second low-voltage loop, control the direct-current converter to be in an open state, and determine an on/off state of the power management unit based on a current existing in the low-voltage loop after the direct-current converter is in the open state; and
the control unit is configured to: when the fault point is located in the second low-voltage loop, control the power management unit to be in an open state.

7. The apparatus according to claim 6, wherein a first end of the power management unit is separately connected to the direct-current converter and the first low-voltage loop, and a second end of the power management unit is connected to the second low-voltage loop, and the determining unit is specifically configured to:
when the current in the low-voltage loop is greater than the preset current and a voltage at the first end of the power management unit is greater than a voltage at the second end of the power management unit, determine that the fault point is located in the second low-voltage loop; and
when the current in the low-voltage loop is greater than the preset current and the voltage at the first end of the power management unit is less than the voltage at the second end of the power management unit, determine that the fault point is not located in the second low-voltage loop.

8. The apparatus according to claim 6, wherein the processing unit is specifically configured to:
after the direct-current converter is in the open state, if the current in the low-voltage loop is greater than the preset current, control the power management unit to be in an open state; and
after the direct-current converter is in the open state, if the current in the low-voltage loop is less than the preset current, control the power management unit to be in a closed state.

9. The apparatus according to any one of claims 6 to 8, wherein the processing unit is further configured to:
when a voltage in the low-voltage loop is greater than a preset voltage, control the direct-current converter to be in an open state, and determine the on/off state of the power management unit based on a voltage existing in the low-voltage loop after the direct-current converter is in an open state.

10. The apparatus according to claim 9, wherein the processing unit is specifically configured to:
after the direct-current converter is in the open state, if the voltage in the low-voltage loop is greater than the preset voltage, control the power management unit to be in an open state; and
after the direct-current converter is in the open state, if the voltage in the low-voltage loop is less than the preset voltage, control the power management unit to be in a closed state.

11. An electronic device, comprising:
a processor, and
a memory configured to store instructions executable by the processor; wherein
the processor is configured to execute the instructions to implement the method according to any one of claims 1 to 5.

12. A computer-readable storage medium, wherein when computer-executable instructions stored in the computer-readable storage medium are executed by a processor of an electronic device, the electronic device is capable of performing the method according to any one of claims 1 to 5.

13. A low-voltage circuit control system, comprising a direct-current converter, a low-voltage loop, and a power management unit configured to perform the method according to any one of claims 1 to 5, wherein
the low-voltage loop comprises a first low-voltage loop and a second low-voltage loop; the power management unit is configured to control on/off of the second low-voltage loop; the direct-current converter is configured to: supply power to a load in the first low-voltage loop, and when the power management unit is in a closed state, supply power to a load in the second low-voltage loop; the second low-voltage loop further comprises a battery; and the battery is configured to: supply power to the load in the second low-voltage loop when the power management unit is in an open state, and supply power to the load in the first low-voltage loop and the load in the second low-voltage loop when the power management unit is in a closed state and the direct-current converter is in an open state.
